# EUROPEAN PATENT SPECIFICATION

(11) **EP 2 817 451 B1**
(45) Date of publication and mention of the grant of the patent: **13.01.2016**
(21) Application number: 13708033.9
(22) Date of filing: 22.02.2013
(51) Int. Cl.: D21H 27/00, D21H 13/24, D21H 13/26, D21H 13/36, D21H 13/40, D21H 13/50, D21H 17/35, D21H 19/20, D21H 19/22, B29C 70/04, B32B 3/12, D21H 15/02

(54) **A FIBER-RESIN COMPOSITE SHEET AND ARTICLE COMPRISING THE SAME**
FASERHARZVERBUNDFOLIE UND ARTIKEL DAMIT
FEUILLE COMPOSITE FIBRE-RÉSINE ET ARTICLE COMPRENANT LADITE FEUILLE

(30) Priority: 23.02.2012 US 201261602199 P
(43) Date of publication of application: 31.12.2014
(73) Proprietor: E. I. du Pont de Nemours and Company, Wilmington, DE 19898 (US)
(72) Inventor: ROZANT, Olivier, F-74350 Cernex (FR); BOOGH, Louis, CH-1277 Borex (CH); MAGNIN, Olivier, CH-1052 Le Mont-Sur-Lausanne (CH)
(74) Representative: Dannenberger, Oliver Andre
(86) International application number: PCT/US2013/027375
(87) International publication number: WO 2013/126739

(56) References cited:
- EP-A1- 0 467 286
- US-A1- 2008 145 601

## Description

### BACKGROUND OF THE INVENTION

### 1. Field of the Invention.

This invention relates to a high strength core structure made from a fibrous substrate. The core structure may be in the form of a honeycomb or a folded core.

### 2. Description of Related Art.

Core structures for sandwich panels made from high strength fibrous paper or fabric substrates, mostly in the form of honeycomb, are used in different applications but primarily in the aerospace and mass transportation industries where strength to weight or stiffness to weight ratios have high values. For example, US Patent 5,137,768 to Lin describes a honeycomb core made from a high-density wet-laid nonwoven fibrous substrate comprising 50 wt.% or more of p-aramid fiber with the rest of the composition being a binder and other additives. An example of such a honeycomb core is Kevlar® core. Similar cores may also be made using m-aramid fiber in place of p-aramid fiber. An example of this type of honeycomb core is Nomex® core.

US Patent 5,527,584 to Darfler et al describes honeycomb cores in which the cell walls comprise woven fabric. The particular weave pattern, filament size and tow size may be varied widely depending upon the structural strength and weight required for the honeycomb structure. A plain weave is one suitable weave style.

US Patent 6,245,407 to Wang et al describes resins which are a combination of phenolic and polyamide polymers that are used as dipping resins to coat honeycomb structures.

Thermoplastic honeycomb may be made by techniques such as heat or ultrasonic forming. Such methods are described in United States patent numbers 5,039,567; 5,421,935 and 5,217,556. This type of process is more efficient than the expansion or corrugation processes used to fabricate honeycomb from paper or fabric substrates.

There is a continuing need to improve the manufacturing efficiency of core structures made from paper or fabric substrates without adversely impacting the mechanical properties of the structure. This is particularly true for structures used in aircraft, trains, and boats. Laser welding a core structure is one approach to increasing manufacturing efficiency.

### BRIEF SUMMARY OF THE INVENTION

The invention pertains to a fiber - resin composite sheet comprising a reinforcing fibrous substrate and a resin coated onto or into the substrate, the resin comprising a first thermoplastic polymer and a second thermoplastic polymer wherein,
(i) the first and second polymers form a two phase blend,
(ii) the first polymer is thermoplastic, has a melting point of from 75 to 400 degrees C and forms a continuous or co-continuous phase with the second polymer.
(iii) the second polymer is dispersed in the continuous or co-continuous phase of the first polymer, has an effective diameter of from 0.01 to 15 micrometers and has a melting point of from 25 to 350 degrees C,
(iv) the first polymer comprises from 35 to 99 weight percent of the combined weight of first and second polymers in the blend,
(v) the second polymer has a melting point at least 5 degrees C lower than the melting point of the first polymer, and
(vi) the reinforcing fibers of the substrate are from fibers having a tenacity of from 3 to 60 grams per dtex and a filament diameter of from 5 to 200 micrometers.

The invention is further directed to a composite article comprising a fiber - resin composite sheet.

### BRIEF DESCRIPTION OF THE DRAWINGS

Figures 1A and 1B are representations of views of a hexagonal shaped honeycomb.
Figure 2 is a representation of another view of a hexagonal cell shaped honeycomb.
Figure 3 is an illustration of honeycomb provided with facesheet(s).
Figure 4 is an illustration of a folded core structure.
Figure 5 is a sectional view of an article comprising a plurality of substrates and an energy absorbing layer.

### DETAILED DESCRIPTION OF THE INVENTION

### Composite Sheet

This invention is directed to a fiber - resin composite sheet comprising a reinforcing fibrous substrate and a resin coated onto or into the substrate. The substrate may be in the form of a paper or fabric.

### Substrate

Preferably the reinforcing fibers of the substrate have a filament tenacity of from 3 to 60 grams per dtex and a filament diameter of from 5 to 200 micrometers. In some embodiments fibers having filament diameters of from 7 to 32 micrometers is preferred. In other embodiments, the filament tenacity is from 8 to 60 grams per dtex. In some embodiments the substrate is a paper.

A preferred paper contains both high strength fibers and binder. In one embodiment, the paper comprises from 10 to 100 weight percent fibers and correspondingly from 0 to 90 weight percent binder. In another embodiment the paper comprises from 10 to 85 weight percent fibers and from 15 to 90 weight percent binder. In yet another embodiment the paper comprises from 50 to 100 weight percent fibers and from 0 to 50 weight percent binder.

The high strength fibers of the paper have an initial Young's modulus of at least 180 grams per dtex (200 grams per denier) and a tenacity of from 11 grams per dtex (10 grams per denier) to 56 grams per dtex (50 grams per denier). In one embodiment, the length of the fibers in the paper is from 0.5 to 26 mm. In another embodiment, the length of the fibers is from 1 to 8 mm and in yet another embodiment, the length of the fibers is from 1.5 to 6 mm.

The reinforcing substrate can also include fibers of lower strength and modulus blended with the higher modulus fibers. The amount of lower strength fiber in the blend will vary on a case by case basis depending on the desired strength of the core structure. The higher the amount of low strength fiber, the lower will be the strength of the core structure. In a preferred embodiment, the amount of lower strength fiber should not exceed 30%. An example of such lower strength fiber is poly (ethylene terephtalamide) fiber or cellulose.

The reinforcing substrate can contain small amounts of inorganic particles and representative particles include mica, vermiculite, and the like; the addition of these performance enhancing additives being to impart properties such as improved fire resistance, thermal conductivity, dimensional stability and the like to the substrate and hence the final core structure.

In some embodiments, the paper thickness is from 12 to 1270 micrometers (0.5 to 50 mils) and the paper basis weight is from 10 to 900 grams per square meter (0.29 to 230 ounces per square yard). The paper may be a single sheet or a plurality of sheets that have been laminated together.

Fibers comprising the paper may be in the form of cut fiber (floc) or pulp either used alone or in combination.

Floc is generally made by cutting continuous spun filaments into specific-length pieces. If the floc length is less than 0.5 millimeters, it is generally too short to provide a paper with adequate strength. If the floc length is more than 26 millimeters, it is very difficult to form uniform wet-laid substrates. Floc having a diameter of less than 5 micrometers, and especially less than 3 micrometers, is difficult to produce with adequate cross sectional uniformity and reproducibility. If the floc diameter is more than 20 micrometers it is very difficult to form uniform papers of light to medium basis weights.

The term "pulp", as used herein, means particles of fibrous material having a stalk and fibrils extending generally therefrom, wherein the stalk is generally columnar and about 10 to 50 micrometers in diameter and the fibrils are fine, hair-like members generally attached to the stalk measuring only a fraction of a micrometer or a few micrometers in diameter and about 10 to 100 micrometers long. One possible illustrative process for making aramid pulp is disclosed in United States Patent No. 5,084,136.

A preferred binder is fibrids. The term "fibrids" as used herein, means a very finely-divided polymer product of small, filmy, essentially two-dimensional particles having a length and width on the order of 100 to 1000 micrometers and a thickness on the order of 0.1 to 1 micrometer. Fibrids are typically made by streaming a polymer solution into a coagulating bath of liquid that is immiscible with the solvent of the solution. The stream of polymer solution is subjected to strenuous shearing forces and turbulence as the polymer is coagulated. Preparation of fibrids is taught in U.S. patent 3,756,908 with a general discussion of processes to be found in U.S. patent 2,999,788. The fibrids should be refined in accordance with the teachings of U.S. patent 3,756,908 only to the extent useful to permit permanent densification and saturability of the final paper. Preferable polymers for fibrids in this invention include aramids (poly (m-phenylene isophthalamide) and poly (p-phenylene terephthalamide)). Other binders include polysulfonamide (PSA), poly-phenylene sulfide (PPS), and polyimides. Other binder materials are in the general form of resins and can be epoxy resins, phenolic resins, polyureas, polyurethanes, melamine formaldehyde resins, polyesters, polyvinyl acetates, polyacrylonitriles, alkyd resins, and the like. Preferred resins are water dispersible and thermosetting. Most preferred resin binders comprise water-dispersible epoxy resins. The binder may also be derived from a biological source. An example of such a polymer is one based on 1,3-propanediol, the diol component being manufactured via a fermentation process from corn sugar. Soy is another source of biological binder material.

The composition of both fibers and fibrids can vary. Preferable types of fibers include aromatic polyamide, liquid crystal polyester, polybenzazole, polypyridazole , polysulfonamide, polyphenylene sulfide, polyolefins, carbon, glass, ceramic, basalt and other inorganic fibers or mixture thereof.

Preferable types of fibrids include aromatic polyamide, aliphatic polyamide, polysulfonamide (PSA), poly-phenylene sulfide (PPS), polyimide and blends thereof.

Suitable aromatic polyamides are meta-aramid and para-aramid. A suitable meta-aramid polymer is poly (m-phenylene isophthalamide) and a suitable para-aramid polymer is poly (p-phenylene terephthalamide).

Papers made using fibrids and short fibers have been described in US Patent No. 3,756,908, to Gross and US Patent No. 5,137,768 to Lin.

A commercially available p-aramid high modulus high strength fiber reinforcing paper substrate for the production of core structures is KEVLAR® N636 paper sold by E. I. DuPont de Nemours and Company, Wilmington, DE. Core structures can also be made from m-aramid fiber nonwoven substrate also available from DuPont under the tradename NOMEX®.

A paper substrate may also comprise cellulose as exemplified by a Kraft paper. Cellulose may also be present in a paper comprising a blend of p-aramid and / or m-aramid and cellulosic fibers. A paper may also comprise polyester or glass fibers either alone or in combination with other fibers.

Once the paper is formed, it is calendered to the desired density or left uncalendered depending on the target final density.

In some embodiments, the fibrous reinforcement substrate is a fabric material comprising continuous filament yarns. By fabric is meant structures that are may be woven, unidirectional, may be multiaxial, 3-dimensional or a nonwoven randomly oriented discontinuous fiber mat. Each of these fabric styles is well known in the art. A multitude of different fabric weave patterns including plain, twill, satin, crowfoot satin, plain derivative, leno and mock leno may be used. Plain weave patterns are preferred. Carbon, ceramic, basalt or glass fibers are preferred fibers for the fabrics. In some embodiments the fabric filaments are of aromatic polyamide or aromatic copolyamide. The yarns can be intertwined and/or twisted. For purposes herein, the term "filament" is defined as a relatively flexible, macroscopically homogeneous body having a high ratio of length to width across its cross-sectional area perpendicular to its length. The filament cross section can be any shape, but is typically circular or bean shaped. Herein, the term "fiber" is used interchangeably with the term "filament". A "yarn" is a plurality of filaments. The filaments can be any length. Multifilament yarn spun onto a bobbin in a package contains a plurality of continuous filaments. The multifilament yarn can be cut into staple fibers and made into a spun staple yarn suitable for use in the present invention. The staple fiber can have a length of about 1.5 to about 5 inches (about 3.8 cm to about 12.7 cm). The staple fiber can be straight (i.e., non crimped) or crimped to have a saw tooth shaped crimp along its length, with a crimp (or repeating bend) frequency of about 3.5 to about 18 crimps per inch (about 1.4 to about 7.1 crimps per cm).

Other suitable fiber forms for some of the fabrics include stretch broken or comingled yarns.

In other embodiments, the fabric is a non-woven mat comprising randomly oriented discontinuous filaments in which the filaments are bonded or interlocked. Example of a nonwoven fabric mats include felts and spunlace or spunbonded sheets.

### Polymeric Resin Coating

A polymeric resin is coated onto or into the reinforcing substrate. In some embodiments, the resin only partly impregnates into the substrate. The coating resin comprises a first thermoplastic polymer and a second thermoplastic polymer. The first and second polymers form a two phase blend. The first polymer comprises from 35 to 99 weight percent of the blend of first and second polymers. In some embodiments, the first polymer comprises from 45 to 85 weight percent or even 45 to 70 weight percent of the blend of first and second polymers. The composite sheet may optionally comprise a third polymer.

In addition, the first or second polymers may optionally comprise, either alone or in combination, reactive or non-reactive additives such as colorants, diluants, processing agents, UV additives, fire retardants, mineral fillers, organic fillers, bonding additives, surfactants, pulp, antioxidants, antistatics, slip agents and tackifiers. A suitable pulp is aramid pulp. Methods for incorporation of these additives into the polymer are well known.

Suitable fire retardants include brominated flame retardants, red phosphorus, asbestos, antimony trioxide, borates, metal hydrates, metal hydroxides, Tetrakis(hydroxymethyl)phosphonium salts, fluorocarbons or combinations thereof.

At least one plasticizer can optionally be added to the polymer, preferably to the second polymer. Suitable examples include phthalate-based plasticisers, trimellitate-based plasticisers, adipate-based plasticisers, sebacate-based plasticisers, maleate-based plasticisers, organophosphate-based plasticisers, sulfonamide-based plasticisers, benzoate-based plasticisers, epoxidised vegetable oils, poly(ethylene oxide) or combinations thereof. In some embodiments, the at least one plasticizer is a plasticizer having a reactive group such as an epoxidised vegetable oil. Examples of epoxidised vegetable oils are epoxidized soybean oil (ESO), epoxidized linseed oil (ELO), epoxidized tallate or combinations thereof.

The polymeric resin coating as described herein provides a coated substrate that is amenable to processing by laser welding techniques.

### First Polymer

Both the first and second polymers belong to a group of polymers having good mechanical properties and good chemical resistance. Such resins are frequently referred to in the trade as High Performance Polymers or Engineered Thermoplastics. Some rubbers and elastomers also fit into this category of material.

The first polymer is a thermoplastic polymer having a melting point of from 75 to 400 degrees C. In some embodiments the first polymer has a melting point of from 110°C to 300°C or even from 140°C to 230°C. The first polymer forms a continuous or co-continuous phase with the second polymer. A continuous phase, as defined by the International Union of Pure and Applied Chemistry (IUPAC), refers to a matrix in which a second phase is dispersed in the form of particles. A co-continuous phase, as described by IUPAC, is a matrix that is either a semi-interpenetrating polymer network (SIPN) or an interpenetrating polymer network (IPN). A semi-interpenetrating polymer network is a polymer comprising one or more polymer network(s) and one or more linear or branched polymer(s) characterized by the penetration on a molecular scale of at least one of the networks by at least some of the linear or branched chains. An interpenetrating polymer network is a polymer comprising two or more networks which are at least partially interlaced on a molecular scale but not covalently bonded to each other and cannot be separated unless chemical bonds are broken. The second polymer forms a dispersion within the first polymer or a co-continuous network within the first polymer. The first polymer provides the major contribution to the thermal and mechanical performance of the composite. Preferably, the first polymer should have a melting point that is higher than the peak operating temperature of the article comprising the composite sheet. The peak operating temperature is defined as the maximum temperature to which the article is exposed when in service. The peak operating temperature will vary according to the particular application for which the polymer is used. Other factors affecting the peak operating temperature are climatic situation, geographical zone, and / or seasonal fluctuations encountered as well as proximity to a heat source. In some embodiments, the first polymer should have a melting point that is at least 5 °C higher than the peak operating temperature. In other embodiments, the first polymer should have a melting point that is at least 10 °C higher than the peak operating temperature.

Preferably, the first polymer is polyolefin, polycondensate, or an elastomeric block copolymer.

Examples of elastomeric block copolymers are acrylonitrile-butadiene-styrene, polyisopropene-polyethylene-butylene-polystyrene or polystyrene-polyisoprene-polystyrene block copolymers, polyether-ester block copolymers, or combinations thereof.

Other suitable polymers include polyamides, polyamide copolymers, polyimides, polyesters, polyurethanes, polyurethane copolymers, polyacrylics, polyacrylonitrils, polysulfones, silicone copolymers.

In some embodiments it is preferred that the first polymer is polyamide, polyester, polyester copolymers or combinations thereof. A preferred polyolefin is polypropylene.

In some other embodiments, it is preferred that the first polymer is a polyamide such as an aliphatic polyamide or a semi-aromatic polyamide. Preferred polyamides are polyamides having an amine-end content of at least 30 %, more preferably of at least 50%, most preferably of at least 70%. Preferably, suitable aliphatic polyamides are Nylon 6, Nylon 66, Nylon 6/66, Nylon 11, Nylon 12, Nylon 612, Nylon 13, Nylon 1010, or combinations thereof. More preferably, suitable aliphatic polyamides are Nylon 6, Nylon 11, Nylon 12, Nylon 612, Nylon 13, Nylon 1010, or combinations thereof.

Preferable semi-aromatic polyamides are Nylon 6T, Nylon 6/6T, Nylon 3T, Nylon 6/3T, Nylon 66/6T, Nylon 10/6T, Nylon 12/6T, Nylon 10/3T, Nylon 12/3T, and/or combinations thereof.

Amorphous polyamides can preferably be used in a range up to 10 weight percent based on the total weight of the polyamides. Preferred is the use of crystalline, semi-crystalline polyamides or combinations thereof.

### Second Polymer

The second polymer is dispersed in the continuous or co-continuous phase of the first polymer and has an effective diameter of from 0.01 to 15 micrometers.

Where the dispersed second thermoplastic polymer is present as spherical particles, the effective diameter is the diameter of the particle. Where the dispersed second thermoplastic polymer is present as non-spherical particles such as elongated spheroid shapes, ellipsoids, or a network of branched filament-like structures, the effective diameter is the diameter that can be traced around a plane of the smallest cross sectional area of the particle.

The second polymer has a melting point of from 25 to 350 degrees C. In some embodiments, the melting point of the second polymer is from 50 to 200 degrees C. Preferably the second polymer has a melting point at least 5 degrees C lower than the melting point of the first polymer. In some embodiments the second polymer has a melting point at least 10 degrees C, 20 degrees C or even 30, 50, 75,100 or 120 degrees C lower than the melting point of the first polymer. The second polymer facilitates processing ease and speed when the composite sheet is being formed into a composite article, for example during laser welding of a core structure. The second polymer also enhances the bond strength between successive fibrous substrates.

In some embodiments, the major dimension of the particles is of the same order of magnitude as the smallest dimension of the filaments comprising the reinforcing substrate.

In other embodiments, the major dimension of the particles is less than the smallest dimension of the filaments comprising the reinforcing substrate. The effective diameter of the particles of the second polymer is from 0.01 to 15 micrometers. In some embodiments, the diameter is from 0.01 to 5 micrometers or even from 0.01 to 1 micrometer. By effective diameter is meant the smallest circular diameter that can be circumscribed around the cross section of the particle.

Preferably, the second polymer is polyolefin, polycondensate, or an elastomeric block copolymer.

Examples of polyolefin polymers are polyethylene, polyethylene copolymers, polypropylene, polypropylene copolymers, polybutylene and polybutylene copolymers.

Suitable polyethylene polymers include low density polyethylene, very low density polyethylene, metallocene polyethylene and polyethylene copolymers such as ethylene/α,β-unsaturated C3-C8 carboxylic acid copolymers and ethylene/α,β-unsaturated C3-C8 carboxylic acid copolymers partially neutralized with metal salts.

Where the second polymer is an ethylene/α,β-unsaturated C3-C8 carboxylic acid copolymer, the α,β-unsaturated C3-C8 carboxylic acid can be chosen from acrylic acid or methacrylic acid.

The ethylene/α,β-unsaturated C3-C8 carboxylic acid copolymer is preferably a terpolymer of ethylene, α,β-unsaturated C3-C8 carboxylic acid and α,β-unsaturated C3-C8 dicarboxylic acid.

The α,β-unsaturated C3-C8 dicarboxylic acid can be maleic acid, maleic anhydride, C1-C4 alkyl half esters of maleic acid, fumaric acid, itaconic acid and itaconic anhydride. Preferably, the α,β-unsaturated C3-C8 dicarboxylic acid is maleic anhydride, ethyl hydrogen maleate and methyl hydrogen maleate. More preferably, the α,β-unsaturated C3-C8 dicarboxylic acid is maleic anhydride, methyl hydrogen maleate or combinations thereof.

The ethylene/α,β-unsaturated C3-C8 carboxylic acid/α,β-unsaturated C3-C8 dicarboxylic acid polymer can further comprise up to 40 weight percent of a C1-C8 alkyl acrylate softening comonomer, which is preferably chosen from methyl (meth)acrylate, ethyl (meth)acrylate or n-butyl (meth)acrylate, more preferably from n-butyl acrylate or ethyl (meth)acrylate.

The term softening comonomer is well-known to those skilled in the art and refers to comonomers such as C1-C8 alkyl acrylate. The term (meth)acrylate covers both acrylate and methacrylate.

In the ethylene/α,β-unsaturated C3-C8 carboxylic acid/α,β-unsaturated C3-C8 dicarboxylic acid polymer, the α,β-unsaturated C3-C8 carboxylic acid can be present in a range of from 2 to 25 weight percent and the α,β-unsaturated C3-C8 dicarboxylic acid can be present in a range of from 0.1 to 15 weight percent with the proviso that the α,β-unsaturated C3-C8 carboxylic acid and the α,β-unsaturated C3-C8 dicarboxylic acid are present from 4 to 26 weight percent, and with the further proviso that the total comonomer content, including the C1-C8 alkyl acrylate softening comonomer, does not exceed 50 weight percent.

In other embodiments, the second polymer is an ethylene/α,β-unsaturated C3-C8 carboxylic acid copolymer partially neutralized with metal ions, which is commonly referred to as "ionomer". The total percent neutralization is from 5 to 90 percent, preferably 10 to 70 percent and more preferably between 25 and 60 percent of the ionomer.

In the case where the second thermoplastic polymer is an ethylene/α,β-unsaturated C3-C8 carboxylic acid copolymer partially neutralized with metal ions, the α,β-unsaturated C3-C8 carboxylic acid can be acrylic acid or methacrylic acid. The ethylene/α,β-unsaturated C3-C8 carboxylic acid copolymer partially neutralized with metal ions is preferably a terpolymer of ethylene, α,β-unsaturated C3-C8 carboxylic acid and α,β-unsaturated C3-C8 dicarboxylic acid partially neutralized with metal ions. The α,β-unsaturated C3-C8 dicarboxylic acid can be chosen from the same components as described above.

The ethylene/α,β-unsaturated C3-C8 carboxylic acid/α,β-unsaturated C3-C8 dicarboxylic acid polymer partially neutralized with metal ions can further comprise up to 40 weight percent of an C1-C8 alkyl acrylate softening comonomer, which is preferably chosen among the same components as already described above.

In the ethylene/α,β-unsaturated C3-C8 carboxylic acid/α,β-unsaturated C3-C8 dicarboxylic acid polymer partially neutralized with metal ions, from 5 to 90 percent of the total number of α,β-unsaturated C3-C8 carboxylic acid units in the polymer are neutralized with metal ions, and the α,β-unsaturated C3-C8 carboxylic acid and the α,β-unsaturated C3-C8 dicarboxylic acid can be present in the same amounts as described above, with the same proviso regarding the α,β-unsaturated C3-C8 carboxylic acid and the α,β-unsaturated C3-C8 dicarboxylic acid and the same further proviso regarding the total comonomer content, including the C1-C8 alkyl acrylate softening comonomer, as described above.

The ethylene/α,β-unsaturated C3-C8 carboxylic acid copolymer that is partially neutralized with metal ions which can be any metal ion of group I or group II of the periodic table. The preferred metal ions are sodium, zinc, lithium, magnesium, calcium or a mixture of any of these. More preferably, the ions are sodium, zinc, lithium or magnesium. Most preferably, the ion is zinc, lithium or combinations thereof.

Partially neutralized ethylene/α,β-unsaturated C3-C8 carboxylic acid copolymers may be prepared by standard neutralization techniques such as is disclosed in US Patent 3,264,272. The resulting ionomers have an melt index (MI) of from 0.01 to 100 grams/10 minutes or more preferably from 0.1 to 30 grams/10 minutes, as measured using ASTM D-1238, condition E (190° C., 2160 gram weight).

The above ionomers can be prepared by free-radical copolymerization methods, using high pressure, operating in a continuous manner as described in US Patents 4,351,931; 5,028,674; 5,057,593 and 5,859,137. Exemplary examples of ionomeric materials include products available from DuPont under the tradename SURLYN, from Exxon under the tradename IOTEK and Dow under the tradename AMPLFY IO.

Examples of elastomeric block copolymers are acrylonitrile-butadiene-styrene, polyisopropene-polyethylene-butylene-polystyrene or polystyrene-polyisoprene-polystyrene block copolymers, polyether-ester block copolymers, or combinations thereof.

Other suitable polymers are polyamides, polyamide copolymers, polyimides, polyesters, polyurethanes, polyurethane copolymers, polyacrylics, polyacrylonitriles, polysulfones, silicone copolymers.

In some embodiments it is preferred that the second polymer is a thermoplastic elastomeric block copolymer such as polyisopropene-polyethylene-butylene-polystyrene or polystyrene-polyisoprene-polystyrene block copolymer.

The first and second polymers may be blended together and produced into various forms such as pellets, fibers, sheets, films, fabrics, hotmelts, powders, liquids or combinations thereof. As examples, the blending can be done by using a kneader, a single or twin screw extruder or a heated melt mixer at a temperature of between 80°C to 420°C. The first polymer forms a continuous or co-continuous phase with the second polymer upon addition of the second polymer.

### Third Polymer

In some embodiments, a third polymer may be present in an amount of from 0 to 99.7 weight percent based on the total weight of first, second and third polymers. The third polymer may also be a bimodal component of the first and second polymers. The third polymer may be polyetheretherketone (PEEK), polyetherketone (PEK), polyetherketoneketone (PEKK), polyphenylene sulfide (PPS), polyetherimide (PEI), polysulphone (PSU), polyimide (PI) and polyphenylene oxide (PPO). The third polymer may be present as a separate layer on the substrate or it may replace the first polymer. In another embodiment the third polymer is blended with the first polymer. An example of such a blend is a polyamide first polymer and a polyimide third polymer.

### Composite Article

The resin coated substrate described above may be incorporated into a composite article such as a structural core, an impact resistant article or a laminate.

It has been found that the use of a first and second resin as described above provides a number of advantages to a composite article.

When subjected to a shear or butt joint test, laminates show cohesive failure. Similar tests on laminates comprising an aliphatic polyamide resin such as nylon 6 or nylon 12 show adhesive failure. This result is indicative of a blend of first and second resin delivering (a) improved bending performance in a sandwich structure comprising core incorporating and (b) ease of expansion during manufacture of a honeycomb core.

Substrates coated with a first and second resin show improved shape retention when compared with similar substrates coated with nylon based resins. This can be demonstrated by placing a sample of coated substrate between two right angle shaped aluminum plates, placing the plate assembly for one minute in an oven at a range of temperatures from 50 to 325 degrees C, removing the plate assembly from the oven, cooling for 10 minutes and then removing the coated substrate from the plate assembly. The plates should be pre-heated to the required temperature before the substrate is positioned between the plates. After 24 hours storage at ambient conditions, the angle formed by the two sides of the substrate is measured. This is known as the retained angle. The closer the retained angle is to 90 degrees, the better is the shape retention property. By ambient conditions is meant a temperature of 23 +/- 1 degrees C and a humidity of 50 +/- 10%. The smaller the difference in

The first and second resins permit a broader operating temperature range of from about 175 to 300 degrees C when compared to a range of about 185 to 275 degrees C for a nylon resin.

The first and second resins are amenable to laser welding of substrates to form a laminate as well as conventional bonding in a hot press, oven or autoclave. Such versatility is not possible with all resin systems.

A core structure may be in the form of a honeycomb or a folded core.

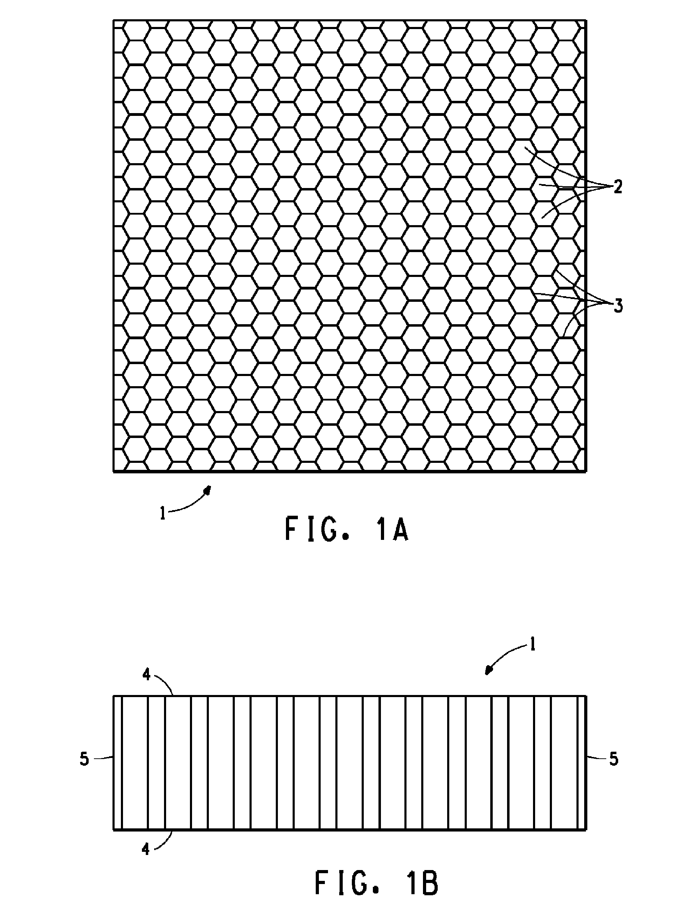

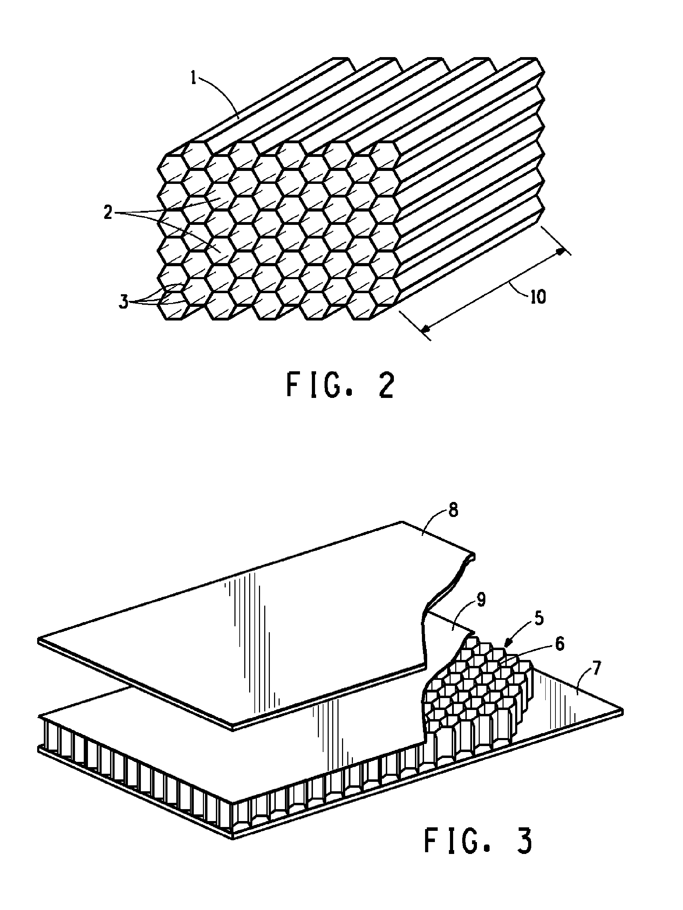

Figure 1A is a plan view illustration of one honeycomb 1 comprising a coated substrate and shows cells 2 formed by cell walls 3. Figure 1B is an elevation view of the honeycomb shown in Figure 1A and shows the two exterior surfaces, or faces 4 formed at both ends of the cell walls. The core also has edges 5. Figure 2 is a three-dimensional view of the honeycomb. Shown is honeycomb 1 having hexagonal cells 2 and cell walls 3. The thickness of the honeycomb is shown at 10 in Figure 2. Hexagonal cells are shown; however, other geometric arrangements are possible with square, over-expanded and flex-core cells being among the most common possible arrangements. Such cell types are well known in the art and reference can be made to Honeycomb Technology pages 14 to 20 by T. Bitzer (Chapman & Hall, publishers, 1997) for additional information on possible geometric cell types.

Figure 3 shows a structural sandwich panel 5 assembled from a honeycomb core 6 with face sheets 7 and 8, attached to the two exterior surfaces of the core. The preferred face sheet material is a prepreg, a fibrous sheet impregnated with thermoset or thermoplastic resin, although face sheets of other material may also be utilized. Examples of other types of facesheet include metal, wood, ceramic and fiber-reinforced plastic. In some circumstances, an adhesive film 9 is also used to enhance the bonding of the facesheet to the core. Normally there are at least two prepreg skins on either side of the core.

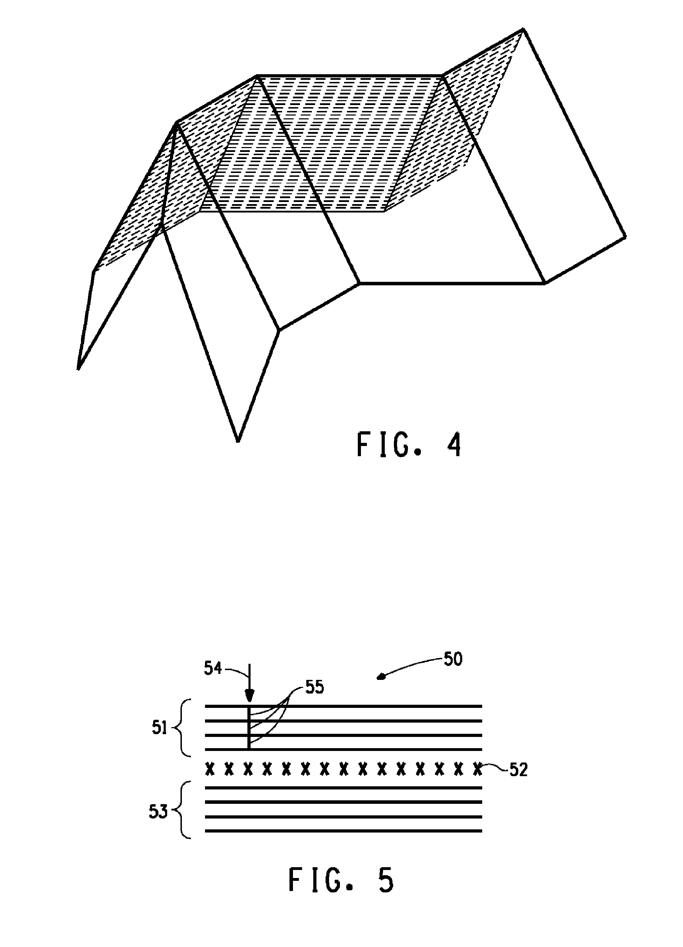

Figure 4 shows a folded core structure which is a 3-dimensional structure of folded geometric patterns folded from a relatively thin planar sheet material. Such folded or tessellated sheet structures are discussed in US patents 6,935,997 B2 and 6,800,351 B1. A chevron is a common pattern for three dimensional folded tessellated core structures. Such structures are different from honeycomb structures. A preferred tessellated folded structure is of the type described in United States patent number 6,913,570 B2 and United States patent publication number 20100048078. A corrugated sheet is another form of a folded core structure.

The core structure may optionally be coated with a fourth polymeric resin. Such a resin can provide additional flame resistance and mechanical strength to the core. Suitable fourth resins include phenolic, flame-retarded (FR) epoxy, FR polyester, polyamide, and polyimide resins. Phenolic resins normally comply with United States Military Specification MIL-R-9299C. Preferably, the resin is a phenol formaldehyde resin and may be a resole or a novolac resin. Other aldehydes, for example furfuraldehyde, may be used, and other phenols for example hydroquinone and p-cresol may also be used. The preparation of p-cresol and properties of such resins are described in "Phenolic Resins," authors A. Knop and L. A. Pilato, Springer-Verlag, Berlin, 1985. A resole resin is cured simply by the application of heat whereas a novolac resin requires for its cure the additional presence of a formaldehyde generating substance, for example hexamethylenetetramine, also known as hexamine. Resole type resins are preferred. Suitable phenolic resins are available from companies such Hexion Specialty Chemicals, Columbus, OH or Durez Corporation, Detroit, MI. When the coating of the substrate by the fourth resin is conducted prior to core forming it is preferred that the resin is partially cured. Such a partial curing process, known as B-staging, is well known in the composite materials industry. By B-stage we mean an intermediate stage in the polymerization reaction in which the resin softens with heat and is plastic and fusible but does not entirely dissolve or fuse. The B-staged reinforcing substrate is still capable of further processing into the desired core shape.

When the resin impregnation is conducted after the core has been formed, it is normally done in a sequence of repeating steps of dipping followed by solvent removal and curing of the resin. The preferred final core densities (nonwoven sheet plus resin) are in the range of from 5 to 500 kg/m³. In some embodiments the range is from 10 to 300 kg/m³ while in other embodiments it is from 15 to 200 kg/m³. During the resin impregnation process, resin is absorbed into and coated onto the reinforcing substrate. The coating resin is applied to the core in accordance with known block dipping or substrate coating procedures.

The resins may be used as solutions or dispersions in solvents or dispersion media, for example water, acetone, propan-2-ol, butanone, ethyl acetate, ethanol, and toluene. Mixtures of these solvents may be used to achieve acceptable evaporation rates of the solvent from the core. The amount of solvent used will vary widely depending upon a number of factors including the type of core material being used. In general, the solvents should be added in conventional amounts to provide a resin solution which may be easily applied in accordance with known processes.

The amount of resin coating which is applied will vary depending upon a number of factors. For example, non-woven materials which are relatively porous will require more resin in order to achieve adequate wetting of the honeycomb walls. For relatively non-porous core materials, it is preferred that a sufficient amount of resin be applied to the material to provide coating thicknesses on the order of 0.0025 to 0.125 mm (0.1 to 5 mils).

When the reinforcing substrate is fabricated into a honeycomb core structure there are two principal methods of manufacture, expansion or corrugation. Expansion methods are commonly used for paper substrates and corrugation methods for fabric substrates. Both methods are well known in the art and are further detailed on page 721 of the Engineered Materials Handbook, Volume 1 - Composites, ASM International, 1988.

In some embodiments, prior to the honeycomb expansion or corrugation processes, the substrate may be coated with a first amount of fourth coating resin with the remainder being applied in a second amount after honeycomb formation.

When the reinforcing substrate is fabricated into a folded core structure, different production techniques are required. Processes for converting substrate substrates into folded core structures are described in US patents 6,913,570 B2 and 7,115,089 B2 as well as US patent application 2007/0141376. In some embodiments, all of the fourth coating resin is applied after folded core formation while in other embodiments the substrate is coated with a first amount of fourth coating resin prior to forming of the core with the remainder being applied in a second amount after core formation.

Methods for coating the substrates before and after core formation are well known in the art.

The thickness of the reinforcement substrate is dependent upon the end use or desired properties of the honeycomb core and in some embodiments is typically from 75 to 500 micrometers (3 to 20 mils) thick. In some embodiments, the basis weight of the substrate is from 15 to 200 grams per square meter (0.5 to 6 ounces per square yard).

Core structures of the above invention may be used to make composite panels having facesheets bonded to at least one exterior surface of the core structure. The facesheet material can be a plastic sheet or plate, a fiber reinforced plastic (prepreg) or metal. The facesheets are attached to the core structure under pressure and usually with heat by an adhesive film or from the resin in the prepreg. The curing is carried out in a press, an oven or an autoclave. Such techniques are well understood by those skilled in the art.

The resin coated substrate described above may also be incorporated into an impact resistant article so as to provide resistance to low and high velocity impact. Suitable articles include covers, bumpers and other crash resistant structures.

The resin coated substrate described above may be incorporated into a composite laminate. One such laminate is a fiber-metal laminate comprising several thin metal layers bonded with layers of the resin coated substrate. The fiber-metal laminate may also comprise other reinforcing fibers. Other composite laminates may be constructed without the metal layers.

During construction of the above articles, it may be advantageous to include at least one energy absorbing layer as a component of the article. Selective positioning of the energy absorbing layer will allow targeted bonding of specific regions within a layer when subjected to a high energy source such as a laser beam. As an example, such a process could be used to form node line welds between successive layers of coated substrate in a honeycomb block. A suitable energy absorbing layer is a polymeric layer comprising carbon black. This effect is shown in Figure 5 where a multilayer stack 50 comprises a first plurality of resin coated substrates 51 and a second plurality of resin coated substrates 53 separated by an energy absorbing layer 52. A high energy beam 54 such as a laser is shown directed towards the outer surface of the first plurality of resin coated substrates. The beam causes the polymer coating of the substrate to melt in the region under the laser beam path thus fusing adjacent layers 55 in the region of the laser beam path. The substrate layers 53 that are below the energy absorption layer are not fused together. The laser beam can move and trace out any desired path such as a straight line, a discontinuous line, a zig-zag, a circle, an oval, a square, a cross, a star or a spiral. The bonding zone between adjacent layers will be bonded in a correspondingly similar pattern.

### TEST METHODS

Density of the honeycomb core was determined in accordance with ASTM C271 - 61.

Compression strength of the core was determined in accordance with ASTM C365 - 57.

Specific compression strength of the core was calculated by dividing compression strength values by the density of the core.

The tensile strength of the adhesively bonded butt joints was determined according to ISO 6922:1987 - EN 26922:1993.

The strength of adhesively bonded rigid plastic lap-shear joints in shear by tension loading was measured according to ASTM D3163-01 (reapproved 2008).

Apparent overlap splice shear strength properties were determined according to ASTMD7616-11.

### EXAMPLES

In the following examples, fabric F was a plain weave fabric comprising yarns of p-aramid commercially available under the tradename Kevlar® 49 from E.I. DuPont de Nemours and Company, Wilmington, DE, The yarns had a linear density of 1580 dtex. The fabric had 6.7 ends per cm in the warp and 6.7 ends per cm in the fill (weft). The fabric weight was 220 gsm.

In the following examples, resin R1 comprised solely of nylon 6 commercially available from BASF under the tradename Ultramid® B27E. The resin was extruded into a sheet having a thickness of 50 micrometers.

In the following examples, resin R2 was a blend of 60 percent by weight of nylon 6 (Ultramid® B27E) and 40 percent by weight of a zinc ionomeric resin. The ionomeric resin comprised 83 percent by weight of ethylene, 11 percent by weight of methacrylic acid and 6 percent by weight of maleic acid anhydride. The ionomeric resin was neutralised to 60 percent. The resin was extruded into a sheet having a thickness of 50 micrometers.

In the following examples, fabric S was a spunlaced fabric comprising 1.7 denier per filament (dpf) fiber of p-aramid commercially available under the tradename Kevlar 970 merge 1F894 from E.I. DuPont de Nemours and Company, Wilmington, DE. The fabric weight was 64 gsm. The fiber had a nominal cut length of 38 mm.

In the following examples, paper P was a para-aramid sheet commercially available under the tradename Kevlar® aramid paper from E.I. DuPont de Nemours and Company, Wilmington, DE. The paper sheet had a basis weight of 61 gsm and a thickness of 0.07 mm (2.8 mil).

In the following examples, resin R3 was a blend of 70 percent by weight of nylon 12 commercially available from Arkema Inc., King of Prussia, PA under the tradename Rilsan® AESNO and 30 percent by weight of nylon 12 Rilsan® AMNO. The resin was extruded into a sheet having a thickness of 50 micrometers.

In the following examples, resin R4 was a blend of 55 percent by weight of resin R1 and 45 percent by weight of a zinc ionomeric resin. The ionomeric resin comprised 83 percent by weight of ethylene, 11 percent by weight of methacrylic acid and 6 percent by weight of maleic acid anhydride. The ionomeric resin was neutralised to 60 percent. Resin R4 was extruded into a sheet having a thickness of 50 micrometers.

### Comparative Example A

A composite assembly was made comprising one layer of fabric F with one layer of extruded resin sheet R1 on either side of fabric F.

The resulting composite assembly was then compression molded in a parallel plate automated press under a pressure of 20 bar while heating from 100°C to 250°C at a rate of 5°C/min. The pressure and temperature conditions were maintained for 15 minutes and the assembly was then cooled down to 50°C at a rate of 5°C/min while still under pressure.

Overlap splice specimens were prepared from the cured composite and tested by tension loading according to ASTM test method D3163-01(2008). The test results were compared according to recommendations given in the ASTM D4896-01-2008. The lap-shear specimens had a length of 105 mm, a width of 25 mm and an overlap of 15 mm. The specimens were bonded in the region of the overlap with an epoxy film adhesive commercially available from Cytec Engineered Materials, Tempe, AZ under the tradename FM 300U. The weight of the adhesive was 150 gsm. Specimen bonding was carried out in a parallel plate automated press using a pressure of 20 bar while heating from 100°C to 175°C at a rate of 5°C/min. The temperature and pressure conditions were maintained for 60 minutes and the press was then cooled down to 50°C at a rate of 5°C/min while still under pressure.

### Example 1

A composite assembly was made comprising one layer of fabric F with one layer of extruded resin sheet R2 on either side of fabric F. The resulting composite assembly was then compression molded in a parallel plate automated press as per Comparative Example A. The resulting laminate was then conditioned for 24 hours at 25°C at 50% RH before being cut for lap-shear testing. Overlap splice specimens were prepared as per Example A except that, instead of using a film adhesive to bond the overlap region, the lap-shear specimens were fused together by compression welding in a parallel plate automated press using a pressure of 20 bar while heating from 100°C to 250°C at a rate of 5°C/min and maintaining the temperature and pressure conditions for 15 minutes. The mold and contents was then cooled down to 50°C at a rate of 5°C/min before the pressure was released.

After testing the samples were visually examined to see the failure mode. The sample failed outside of the overlap bonded region. That is to say, the bonded overlap is stronger than the composite laminate.

### Comparative Example B

This example was prepared and tested in an identical manner to Example 1 except that extruded resin sheet R1 was used instead of R2. Examination of the tested samples showed adhesive failure. That is to say, that the test coupons failed in the region of the fused (welded) joint. This leads to a conclusion that resin sheet R2 used in Example 1 provides for a stronger composite than resin sheet R1 used in Comparative Example B.

### Comparative Example C

A composite assembly was made comprising one layer of paper P with one layer of extruded resin sheet R3 on either side of the paper sheet. The resulting composite assembly was then compression molded in a parallel plate automated press under a pressure of 20 bar while heating from 100°C to 220°C at a rate of 5°C/min. The pressure and temperature conditions were maintained for 15 minutes and the assembly was then cooled down to 50°C at a rate of 5°C/min while still under pressure.

### Example 2

A composite assembly was made comprising one layer of paper P with one layer of extruded resin sheet R4 on either side of the paper sheet. The same processing conditions as for the manufacture of Comparative Example C were used.

### Comparative Example D

A composite assembly was made comprising one layer of fabric S with one layer of extruded resin sheet R3 on either side of the fabric. The same processing conditions as for the manufacture of Comparative Example C were used.

### Example 3

A composite assembly was made comprising one layer of fabric S with one layer of extruded resin sheet R4 on either side of the fabric. The same processing conditions as for the manufacture Comparative Example C were used.

### Comparative Example E

A composite assembly was made comprising one layer of fabric F with one layer of extruded resin sheet R1 on either side of fabric F. The same processing conditions as for the manufacture of Comparative Example C were used.

### Example 4

A composite assembly was made comprising one layer of fabric F with one layer of extruded resin sheet R4 on either side of the fabric. The same processing conditions as for the manufacture of Comparative Example C were used.

### Example 5

A composite assembly was made comprising one layer of fabric F with one layer of extruded resin sheet R2 on either side of the fabric. The same processing conditions as for the manufacture of Comparative Example A were used.

### Comparative Example F

In this comparative example two laminates of Comparative Example A were bonded together by the means of a structural bonding epoxy film adhesive weighing 150 gsm that was commercially available from Cytec Engineered Materials, Tempe, AZ under the tradename FM 300U,. Bonding was carried out in a parallel plate automated press using a pressure of 10 bar while heating from 100°C to 175°C at a rate of 5°C/min. The temperature and pressure conditions were maintained for 60 minutes and the press then cooled down to 50°C at a rate of 15°C/min while still under pressure.

### Thermoforming Evaluation

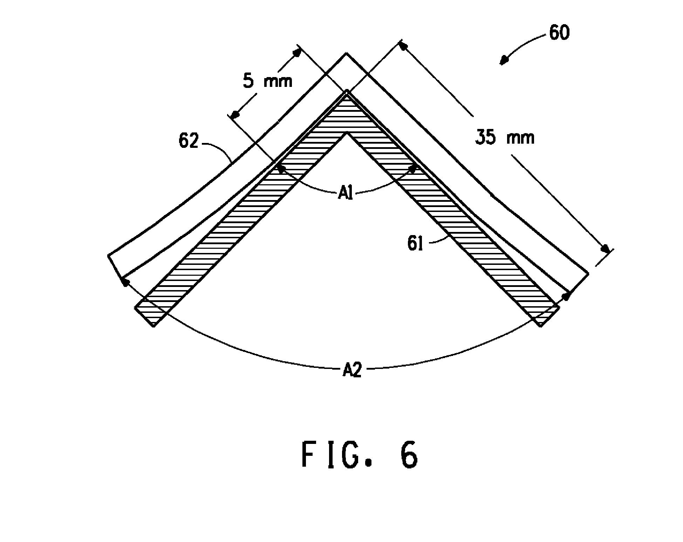

Individual composite laminated reinforced layers manufactured from each of Comparative Examples A, D and Examples 2 and 3 were subjected to a thermoforming test. The test sample dimensions were 75mm x 25 mm. The samples were placed in a forming tool. The forming tool comprised two aluminum plates, each plate being 150 mm x 200 mm folded in the width direction to form an L shape with a 90 degree angle between the two sides. The two plates of the tool were heated to the forming temperature. The forming temperatures were 50°C, 100°C, 150°C, 175°C, 185°C, 200°C, 225°C, 250°C, 275°C, 300°C and 325°C. Test coupons which had been maintained at ambient (room) temperature were placed between the two heated plates and kept for 1 minute inside an oven before being removed from the oven and cooled to room temperature. The molding tool containing the shaped laminate was kept at ambient temperature for 24 hours before the outer plate was removed. At least three composite laminates were tested for each temperature condition. The objective of the measurements was to observe how well the laminate retained its shape after removal of the outer component of the molding tool. FIG 6 shows at 61, the inner L shaped component of the molding tool. The laminate is shown at 62. The first angle A1 is measured 5 mm away from the apex of tool component 61. The second angle, A2 is measured 35 mm away from the apex of tool component 61. If the molded laminate retained 100% of its "as molded" shape when removed from the mold, then angles A1 and A2 would be the same. Any tendency for the shaped laminate to return to its original flat pre-molding shape will result in angle A2 being greater than A1. Composite laminate constructions having the lowest difference between A2 and A1 will have the best post-molding shape retention and thermoformability. The results are summarized in Table 1 for a molding temperature of 150°C, which is close to but below the melting point temperature of the resins R3 and R4.

**Table 1**

| | Comp Ex. A | Ex. 2 | Comp Ex. D | Ex. 3 |
|---|---|---|---|---|
| Average of the difference between angle A2 and A1 (°) | 7.0 | 3.3 | 23.0 | 2.3 |
| Relative thermoforming improvement for each pair | 0% | 52% | 0% | 90% |

Table 1 shows the thermoforming performances for Comparative Examples A and D and Examples 2 and 3. As can be seen, the laminates comprising the thermoplastic compositions of the present invention show a better thermoforming behavior and shape retention when compared to the compositions of the comparative examples. These thermoforming improvements are considered to be significant. At higher temperatures above the melting point of the thermoplastic polymers, the processing window is wider, the shape retention is better and the process robustness is significantly improved.

### T-Peel Tests

Individual composite laminated reinforced layers manufactured according to Comparative Examples A, E and Examples 4 and 5 were tested by a T-Peel test according to ASTM D1876-08. The test specimens consisted of two laminates of each example thermally fused together without any additional adhesive. The test sample dimensions were 150mm x 25 mm, and the bonded length was 100 mm. Specimen fusing was carried out in a parallel plate automated press using a pressure of 10 bar at 220°C or 250°C, respectively for the thermoplastic laminates made with respectively the resin system R3 or R4. The temperature was maintained for 5 minutes at 10 bar, then cooled down to 50°C at a rate of 50°C/min while still under pressure.

The peel tests were carried out seven days after the bonding (fusing) process. The ends of each specimen were clamped in the test grips of a Zwick® tension testing machine model 1445 having a 1 kN load cell and a resolution of 0.1 N. Such equipment is available from Zwick GmbH & Co. KG, Ulm, Germany.

The load was applied at a constant head speed of 50 mm/min. At least five samples per each bonding or fusing condition were tested. All the test coupons failed cohesively in the region of the fused (welded) joint. The results are summarized in Table 2.

**Table 2**

| | Comp EX. E | Ex 4 | Comp Ex. A | Ex 5 |
|---|---|---|---|---|
| Peel Strength [N] | 51.0 | 66.1 | 54.4 | 57.5 |
| Std. Dev. | 4.4 | 2.2 | 7.9 | 5.1 |
| Relative bonding improvement versus Comp Ex E | 0% | 30% | 7% | 13% |
| Relative bonding improvement versus Comp Ex F | 2% | 32% | 9% | 15% |

Table 2 shows the strength of the fusion or adhesive bonds for Comparative Examples A, E and F and Examples 4 and 5. The peel strength of the thermally fused specimens is as good as or better than that of the adhesively bonded laminate, the latter being an example of what is commonly used in the industry.

The above data confirms that a fiber-resin composite as described herein possesses sufficient bonding strength and thermoforming capability to be a suitable material honeycomb and other core structures by production methods such as expansion, corrugation or other folding methods. Application in other areas of fiber reinforced composite scan also be envisaged.

A honeycomb core structure comprising a paper or fabric coated with resin R2 or R4 will exhibit increased shear strength when compared to a similar core structure comprising only a nylon coating resin. No deterioration in tensile strength is expected when resins R2 and R4 are used. When compared to a core structure comprising paper or fabric coated with a thermoset resin, the core comprising resin R2 or R4 will have inherently increased toughness properties, good fatigue, enhanced formability and production efficiency gains.

## Claims

1. A fiber - resin composite sheet comprising a reinforcing fibrous substrate and a resin coated onto or into the substrate, the resin comprising a first thermoplastic polymer and a second thermoplastic polymer wherein
(i) the first and second polymers form a two phase blend,
(ii) the first polymer is thermoplastic, has a melting point of from 75 to 400 degrees C and forms a continuous or co-continuous phase with the second polymer.
(iii) the second polymer is dispersed in the continuous or co-continuous phase of the first polymer, has an effective diameter of from 0.01 to 15 micrometers and has a melting point of from 25 to 350 degrees C,
(iv) the first polymer comprises from 35 to 99 weight percent of the combined weight of first and second polymers in the blend,
(v) the second polymer has a melting point at least 5 degrees C lower than the melting point of the first polymer, and
(vi) the reinforcing fibers of the substrate are from fibers having a tenacity of from 3 to 60 grams per dtex and a filament diameter of from 5 to 200 micrometers.

2. The composite sheet of claim 1, wherein the first and second polymer is polyolefin, polycondensate, or an elastomeric block copolymer.

3. The composite sheet of claim 2, wherein the polyolefin is polypropylene.

4. The composite sheet of claim 1, 2 or 3, wherein the fibrous substrate is a paper or a fabric.

5. The composite sheet of claim 4, wherein the paper comprises from 10 to 100 weight percent of aramid fibers and from 0 to 90 weight percent of aramid binder.

6. The composite sheet of claim 4, wherein the paper comprises fibers of p-aramid, m-aramid, cellulose, polyester, glass fiber, ceramic, carbon, basalt or mixtures thereof.

7. The composite sheet of claim 4, wherein the fabric is woven, unidirectional, multiaxial, 3-dimensional or nonwoven and comprises filaments having a tenacity of from 8 to 60 grams per dtex and a filament diameter of from 7 to 32 micrometers.

8. The composite sheet of claim 7, wherein the fabric comprises filaments of aromatic polyamide, aromatic copolyamide, glass, ceramic, carbon, basalt or mixtures thereof.

9. The composite sheet of claim 7, wherein the nonwoven is a felt, a spunlace sheet or a spunbonded sheet.

10. A composite article comprising the composite sheet of any one of claims 1 to 9.

11. The article of claim 10, wherein the article is a honeycomb structure, a folded core structure, an impact resistant article or a composite laminate.

12. A honeycomb or folded core structure of claim 11 comprising a fourth resin.

13. A structural sandwich panel comprising a honeycomb or folded core of claim 11 having at least one facesheet attached to both exterior surfaces of the core.

## Patentansprüche

1. Faser-Harz-Verbundstoffplatte umfassend ein verstärkendes faseriges Substrat und ein auf oder in das Substrat schichtförmig auf- bzw. eingebrachtes Harz, wobei das Harz ein erstes thermoplastisches Polymer und ein zweites thermoplastisches Polymer umfasst, wobei
(i) die ersten und zweiten Polymere eine Zweiphasenmischung bilden,
(ii) das erste Polymer thermoplastisch ist, einen Schmelzpunkt von 75 bis 400 Grad C aufweist und eine kontinuierliche oder ko-kontinuierliche Phase mit dem zweiten Polymer bildet,
(iii) das zweite Polymer in der kontinuierlichen oder ko-kontinuierlichen Phase des ersten Polymers dispergiert ist, einen effektiven Durchmesser von 0,01 bis 15 Mikrometern und einen Schmelzpunkt von 25 bis 350 Grad C aufweist,
(iv) das erste Polymer 35 bis 99 Gewichtsprozent des kombinierten Gewichts der ersten und zweiten Polymere in der Mischung umfasst,
(v) das zweite Polymer einen Schmelzpunkt aufweist, der mindestens 5 Grad C niedriger ist als der Schmelzpunkt des ersten Polymers und
(vi) die verstärkenden Fasern des Substrats aus Fasern stammen, die eine Reißfestigkeit von 3 bis 60 Gramm pro dtex und einen Filamentdurchmesser von 5 bis 200 Mikrometern aufweisen.

2. Verbundstoffplatte nach Anspruch 1, wobei das erste und zweite Polymer Polyolefin, Polykondensat oder ein elastomeres Blockcopolymer ist.

3. Verbundstoffplatte nach Anspruch 2, wobei das Polyolefin Polypropylen ist.

4. Verbundstoffplatte nach Anspruch 1, 2 oder 3, wobei das faserige Substrat ein Papier oder ein Textilstoff ist.

5. Verbundstoffplatte nach Anspruch 4, wobei das Papier 10 bis 100 Gewichtsprozent Aramidfasern und 0 bis 90 Gewichtsprozent Aramidbindemittel umfasst.

6. Verbundstoffplatte nach Anspruch 4, wobei das Papier Fasern aus p-Aramid, m-Aramid, Cellulose, Polyester, Glasfaser, Keramik, Kohlenstoff, Basalt oder Mischungen davon umfasst.

7. Verbundstoffplatte nach Anspruch 4, wobei der Textilstoff gewoben, unidirektional, multiaxial, 3-dimensional oder ein Vliesstoff ist und Filamente umfasst, die eine Reißfestigkeit von 8 bis 60 Gramm pro dtex und einen Filamentdurchmesser von 7 bis 32 Mikrometern aufweisen.

8. Verbundstoffplatte nach Anspruch 7, wobei der Textilstoff Filamente aus aromatischem Polyamid, aromatischem Copolyamid, Glas, Keramik, Kohlenstoff, Basalt oder Mischungen davon aufweist.

9. Verbundstoffplatte nach Anspruch 7, wobei der Vliesstoff ein Filz, eine Spunlace-Platte oder eine Spinnvliesplatte ist.

10. Verbundstoffartikel umfassend die Verbundstoffplatte nach einem der Ansprüche 1 bis 9.

11. Artikel nach Anspruch 10, wobei der Artikel eine Wabenstruktur, eine gefaltete Kernstruktur, ein stoßfester Artikel oder ein Verbundstofflaminat ist.

12. Waben- oder gefaltete Kernstruktur nach Anspruch 11, ein viertes Harz umfassend.

13. Strukturelle Sandwichtafel, die einen Waben- oder gefalteten Kern nach Anspruch 11 umfasst, bei dem mindestens eine Deckplatte an beiden Außenflächen des Kerns befestigt ist.

## Revendications

1. Feuille composite fibre-résine comprenant un substrat fibreux de renfort et une résine revêtue sur ou dans le substrat, la résine comprenant un premier polymère thermoplastique et un second polymère thermoplastique où
(i) le premier et le second polymère forment un mélange à deux phases,
(ii) le premier polymère est thermoplastique, a un point de fusion de 75 à 400 degrés C et forme une phase continue ou co-continue avec le second polymère,
(iii) le second polymère est dispersé dans la phase continue ou co-continue du premier polymère, a un diamètre efficace de 0,01 à 15 micromètres et a un point de fusion de 25 à 350 degrés C,
(iv) le premier polymère comprend de 35 à 99 pour cent en poids du poids combiné du premier et du second polymère dans le mélange,
(v) le second polymère a un point de fusion d'au moins 5 degrés C inférieur au point de fusion du premier polymère, et
(vi) les fibres de renfort du substrat proviennent de fibres ayant une ténacité de 3 à 60 grammes par dtex et un diamètre de filament de 5 à 200 micromètres.

2. Feuille composite selon la revendication 1, où le premier et le second polymère sont une polyoléfine, un polycondensat, ou un copolymère séquencé élastomère.

3. Feuille composite selon la revendication 2, où la polyoléfine est le polypropylène.

4. Feuille composite selon la revendication 1, 2 ou 3, où le substrat fibreux est un papier ou un textile.

5. Feuille composite selon la revendication 4, où le papier comprend de 10 à 100 pour cent en poids de fibres d'aramide et de 0 à 90 pour cent en poids de liant aramide.

6. Feuille composite selon la revendication 4, où le papier comprend des fibres de *p-*aramide, de *m*-aramide, de cellulose, de polyester, de fibre de verre, de céramique, de carbone, de basalte ou de leurs mélanges.

7. Feuille composite selon la revendication 4, où le textile est tissé, unidirectionnel, multiaxial, tridimensionnel ou non-tissé et comprend des filaments ayant une ténacité de 8 à 60 grammes par dtex et un diamètre de filament de 7 à 32 micromètres.

8. Feuille composite selon la revendication 7, où le textile comprend des filaments de polyamide aromatique, de copolyamide aromatique, de verre, de céramique, de carbone, de basalte ou de leurs mélanges.

9. Feuille composite selon la revendication 7, où le non-tissé est un feutre, une feuille lacée par filage ou une feuille filée-liée.

10. Article composite comprenant la feuille composite selon l'une quelconque des revendications 1 à 9.

11. Article selon la revendication 10, où l'article est une structure en nid d'abeilles, une structure pliée à âme, un article résistant aux chocs ou un stratifié composite.

12. Structure en nid d'abeilles ou pliée à âme selon la revendication 11 comprenant une quatrième résine.

13. Panneau structurel type sandwich comprenant une âme en nid d'abeilles ou pliée selon la revendication 11 ayant au moins une feuille frontale fixée aux deux surfaces externes de l'âme.
